# EUROPEAN PATENT APPLICATION

(11) **EP 4 398 650 A1**
(43) Date of publication of application: **10.07.2024**
(21) Application number: 22863383.0
(22) Date of filing: 29.08.2022
(51) Int. Cl.: H04W 52/02, H04W 76/28

(54) **INFORMATION PROCESSING METHOD AND APPARATUS, AND READABLE STORAGE MEDIUM**

(30) Priority: 02.09.2021 CN 202111025578
(71) Applicant: Datang Mobile Communications Equipment Co., Ltd., Beijing 100085 (CN)
(72) Inventor: CHEN, Li, Beijing 100085 (CN)
(74) Representative: dompatent von Kreisler Selting Werner - Partnerschaft von Patent- und Rechtsanwälten mbB
(86) International application number: PCT/CN2022/115488
(87) International publication number: WO 2023/030247

(57) **Abstract**

The disclosure provides an information processing method, an information processing apparatus and a readable storage medium, and relates to the technical field of communications, so as to reduce the power consumption of a terminal. The method includes: receiving, by a terminal, physical-layer power-saving indication information from a network device; and determining, by the terminal based on the physical-layer power-saving indication information, whether to start a DRX on-duration timer of one or more target DRX configurations corresponding to the physical-layer power-saving indication information.

## Description

### CROSS-REFERENCE TO RELATED APPLICATION

This application claims priority to Chinese Patent Application No. 202111025578.9 filed in China on September 2, 2021, the disclosure of which is incorporated by reference herein in its entirety.

### TECHNICAL FIELD

The present disclosure relates to the field of communications technology, in particular to an information processing method, an information processing apparatus and a readable storage medium.

### BACKGROUND

The 5^{th} generation mobile communication technology (5G) supports multicast and broadcast services (MBS). A service bearer bearing MBS service data over an air interface is referred to as MBS radio bearer (MRB). Transmission of MBS service data may be performed over the air interface in a point-to-multipoint (PTM) mode or a point-to-point (PTP) mode. The PTM refers to a mode in which data transmitted by a base station over the air interface is received by a group of terminals simultaneously, while the PTP refers to a mode in which data transmitted by a base station over the air interface is received by only one terminal. One terminal may receive multiple MBS service bearers, and the base station may configure, for the terminal, multiple discontinuous reception (DRX) configurations for different MBS transmissions, where each DRX configuration may correspond to the service over one MRB. If one MRB corresponds to one group-radio network temporary identity (Group-RNTI, G-RNTI), one DRX configuration may be configured for each G-RNTI.

The DRX mechanism may allow a terminal to periodically enter a dormant state at certain times without monitoring a subframe of a physical downlink control channel (PDCCH). When it is necessary to perform monitoring, the terminal is waken up from the dormant state, so as to achieve the goal of power saving.

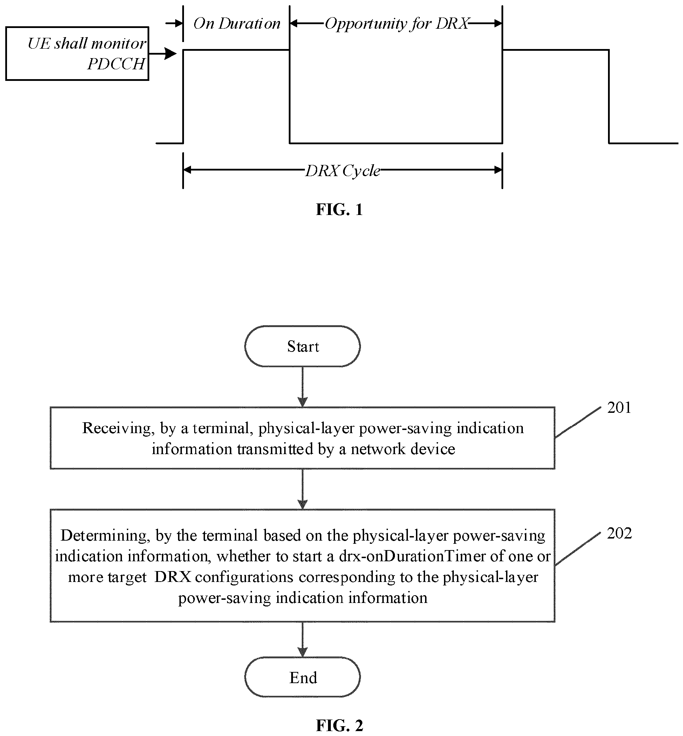

The DRX mechanism in a connected state is as shown in FIG. 1, where a duration marked as "On Duration" is a duration in which the terminal monitors a subframe of a PDCCH. The terminal is in a wake-up state in this duration. A duration marked as "Opportunity for DRX" is a DRX dormant duration, i.e., a time period during which the terminal enters the dormant mode without monitoring the subframe of the PDCCH in order to save power. From FIG. 1, it may be seen that the longer the DRX dormant duration is, the lower the power consumption of the terminal is, meanwhile, however, the transmission delay of the service would increase accordingly. "Opportunity for DRX" may also be referred to as DRX off, or DRX inactive state.

For the DRX mechanism of unicast services, a wake-up mechanism is further introduced. A terminal only has one DRX configuration for each frequency band, so it is suffice for the terminal to only monitor for a physical-layer power-saving indication corresponding to the DRX configuration. However, for the MBS services, there may be multiple DRX configurations corresponding to different MRBs, so how to perform monitoring while reducing power consumption of the terminal is a technical problem that needs to be solved.

### SUMMARY

Embodiments of the present disclosure provide an information processing method, an information processing apparatus, and a readable storage medium, so as to reduce power consumption of a terminal.

In a first aspect, an embodiment of the present disclosure provides an information processing method, which is applied to a terminal. The method includes:
receiving, by the terminal, physical-layer power-saving indication information transmitted by a network device; and
determining, by the terminal based on the physical-layer power-saving indication information, whether to start a DRX on-duration timer of one or more target DRX configurations corresponding to the physical-layer power-saving indication information.

Optionally, the target DRX configuration includes a DRX configuration for a PTM transmission, or the target DRX configuration includes the DRX configuration for the PTM transmission and a DRX configuration for a PTP transmission.

Optionally, the method further includes: obtaining, by the terminal, physical-layer power-saving reference information transmitted by the network device, where the physical-layer power-saving reference information includes a physical-layer power-saving configuration and a mapping relationship between the physical-layer power-saving configuration and a DRX configuration; where the physical-layer power-saving configuration includes a value of a power saving radio network temporary identity (PS-RNTI), and different PS-RNTI values correspond to different respective physical-layer power-saving indication information.

Optionally, the determining, by the terminal based on the physical-layer power-saving indication information, whether to start the DRX on-duration timer of one or more target DRX configurations corresponding to the physical-layer power-saving indication information includes: determining, by the terminal based on the physical-layer power-saving indication information and the physical-layer power-saving reference information, whether to start the DRX on-duration timer of one or more target DRX configurations.

Optionally, the mapping relationship includes one or more of the following forms:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index. The determining, by the terminal based on the physical-layer power-saving indication information and the physical-layer power-saving reference information, whether to start the DRX on-duration timer of one or more target DRX configurations includes: determining, by the terminal based on the physical-layer power-saving indication information, the physical-layer power-saving configuration, the mapping relationship between the physical-layer power-saving configuration and a DRX configuration, and the indication information, whether to start the DRX on-duration timer of one or more target DRX configurations.

Optionally, the determining, by the terminal based on the physical-layer power-saving indication information and the physical-layer power-saving reference information, whether to start the DRX on-duration timer of one or more target DRX configurations includes one or more of the following:
starting or not starting, by the terminal, DRX on-duration timers of all DRX configurations;
starting or not starting, by the terminal, a DRX on-duration timer of a target DRX configuration associated with a target MBS service or a target MBS session;
starting or not starting, by the terminal, a DRX on-duration timer of a first target DRX configuration, where a configuration index of the first target DRX configuration or a Group-RNTI associated with the first target DRX configuration corresponds to the physical-layer power-saving configuration;
starting or not starting, by the terminal, a DRX on-duration timer of a second target DRX configuration, where a configuration index of the second target DRX configuration is a DRX index indicated by the DCI bearing the physical-layer power-saving indication information.

Optionally, the physical-layer power-saving configuration further includes one or more of the following information: an effective duration of the physical-layer power-saving indication information, and a quantity of DRX configurations for which the physical-layer power-saving indication information is in effect.

Optionally, the determining, by the terminal, whether to start the DRX on-duration timer of one or more target DRX configurations includes:
starting or not starting, by the terminal, the DRX on-duration timers of all the DRX configurations within the effective duration of the physical-layer power-saving indication information;
starting or not starting, by the terminal, a first target quantity of DRX on-duration timers within the defined quantity of DRX configurations for which the physical-layer power-saving indication information is in effect, where the first target quantity is related to the quantity of DRX configurations for which the physical-layer power-saving indication information is in effect;
starting or not starting, by the terminal, a DRX on-duration timer of a target DRX configuration associated with a target MBS service or a target MBS session within the effective duration of the physical-layer power-saving indication information;
starting or not starting, by the terminal, a second target quantity of DRX on-duration timers associated with the target MBS service or the target MBS session within the defined quantity of DRX configurations for which the physical-layer power-saving indication information is in effect, where the second target quantity is related to the quantity of DRX configurations for which the physical-layer power-saving indication information is in effect;
starting or not starting, by the terminal, a DRX on-duration timer of a second target DRX configuration within the effective duration of the physical-layer power-saving indication information;
starting or not starting, by the terminal, DRX on-duration timers of a third target quantity of second target DRX configurations within the defined quantity of DRX configurations for which the physical-layer power-saving indication information is in effect, where the third target quantity is related to the quantity of DRX configurations for which the physical-layer power-saving indication information is in effect.

In a second aspect, an embodiment of the present disclosure further provides an information processing method, applied to a network device, including:
transmitting, by the network device, physical-layer power-saving indication information to the terminal, where the physical-layer power-saving indication information is used for the terminal to determine whether to start a DRX on-duration timer of one or more target DRX configurations corresponding to the physical-layer power-saving indication information; and
performing processing by the network device according to whether the one or more target DRX configurations are activated by the terminal.

Optionally, the method further includes: transmitting, by the network device, physical-layer power-saving reference information to the terminal, where the physical-layer power-saving reference information includes a physical-layer power-saving configuration and a mapping relationship between the physical-layer power-saving configuration and a DRX configuration.

Optionally, the target DRX configuration includes a DRX configuration for a PTM transmission, or the target DRX configuration includes the DRX configuration for the PTM transmission and a DRX configuration for a PTP transmission.

Optionally, the mapping relationship between the physical-layer power-saving configuration and a DRX configuration includes any one of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index.

Optionally, the physical-layer power-saving configuration further includes one or more of the following information: an effective duration of the physical-layer power-saving indication information, and a quantity of DRX configurations for which the physical-layer power-saving indication information is in effect.

In a third aspect, an embodiment of the present disclosure provides an information processing apparatus, which is applied to a terminal. The apparatus includes: a memory, a transceiver, a processor. The memory is configured to store a computer program; the transceiver is configured to transmit and receive data under the control of the processor; the processor is configured to read the computer program from the memory to perform the following operations:
receiving physical-layer power-saving indication information transmitted by a network device; and
determining, based on the physical-layer power-saving indication information, whether to start a DRX on-duration timer of one or more target DRX configurations corresponding to the physical-layer power-saving indication information.

Optionally, the target DRX configuration includes a DRX configuration for a PTM transmission, or the target DRX configuration includes the DRX configuration for the PTM transmission and a DRX configuration for a PTP transmission.

Optionally, the processor is further configured to: receive physical-layer power-saving reference information transmitted by the network device, where the physical-layer power-saving reference information includes a physical-layer power-saving configuration and a mapping relationship between the physical-layer power-saving configuration and a DRX configuration; where the physical-layer power-saving configuration includes a value of a PS-RNTI, and different PS-RNTI values correspond to different respective physical-layer power-saving indication information.

Optionally, the processor is further configured to: determine, based on the physical-layer power-saving indication information and the physical-layer power-saving reference information, whether to start the DRX on-duration timer of one or more target DRX configurations.

Optionally, the mapping relationship includes one or more of the following forms:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index. The processor is further configured to determine, based on the physical-layer power-saving indication information, the physical-layer power-saving configuration, the mapping relationship between the physical-layer power-saving configuration and a DRX configuration, and the indication information, whether to start the DRX on-duration timer of one or more target DRX configurations.

Optionally, the processor is further configured to perform any one or more of the following:
starting or not starting DRX on-duration timers of all the DRX configurations;
starting or not starting a DRX on-duration timer of a target DRX configuration associated with a target MBS service or a target MBS session;
starting or not starting a DRX on-duration timer of a first target DRX configuration, where a configuration index of the first target DRX configuration or a Group-RNTI associated with the first target DRX configuration corresponds to the physical-layer power-saving configuration;
starting or not starting a DRX on-duration timer of a second target DRX configuration, where a configuration index of the second target DRX configuration is a DRX index indicated by the DCI bearing the physical-layer power-saving indication information.

Optionally, the physical-layer power-saving configuration further includes one or more of the following information: an effective duration of the physical-layer power-saving indication information, and the quantity of DRX configurations for which the physical-layer power-saving indication information is in effect.

Optionally, the processor is further configured to perform one or more of the following:
starting or not starting, by the terminal, the DRX on-duration timers of all the DRX configurations within the effective duration of the physical-layer power-saving indication information;
starting or not starting, by the terminal, a first target quantity of DRX on-duration timers within the defined quantity of DRX configurations for which the physical-layer power-saving indication information is in effect, where the first target quantity is related to the quantity of DRX configurations for which the physical-layer power-saving indication information is in effect;
starting or not starting, by the terminal, a DRX on-duration timer of a target DRX configuration associated with a target MBS service or a target MBS session within the effective duration of the physical-layer power-saving indication information;
starting or not starting, by the terminal, a second target quantity of DRX on-duration timers associated with the target MBS service or the target MBS session within the defined quantity of DRX configurations for which the physical-layer power-saving indication information is in effect, where the second target quantity is related to the quantity of DRX configurations for which the physical-layer power-saving indication information is in effect;
starting or not starting, by the terminal, a DRX on-duration timer of a second target DRX configuration within the effective duration of the physical-layer power-saving indication information;
starting or not starting, by the terminal, DRX on-duration timers of a third target quantity of second target DRX configurations within the defined quantity of DRX configurations for which the physical-layer power-saving indication information is in effect, where the third target quantity is related to the quantity of DRX configurations for which the physical-layer power-saving indication information is in effect.

In a fourth aspect, an embodiment of the present disclosure further provides an information processing apparatus for a network device. The apparatus includes: a memory, a transceiver, a processor. The memory is configured to store a computer program; the transceiver is configured to transmit and receive data under the control of the processor; the processor is configured to read the computer program from the memory to perform the following operations:
transmitting physical-layer power-saving indication information to a terminal, where the physical-layer power-saving indication information is used for the terminal to determine whether to start a DRX on-duration timer of one or more target DRX configurations corresponding to the physical-layer power-saving indication information; and
performing processing according to whether the one or more target DRX configurations are activated by the terminal.

Optionally, the target DRX configuration includes a DRX configuration for a PTM transmission, or the target DRX configuration includes the DRX configuration for the PTM transmission and a DRX configuration for a PTP transmission.

Optionally, the mapping relationship between the physical-layer power-saving configuration and a DRX configuration includes any one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index.

Optionally, the physical-layer power-saving configuration further includes one or more of the following information: an effective duration of the physical-layer power-saving indication information, and a quantity of DRX configurations for which the physical-layer power-saving indication information is in effect.

In a fifth aspect, an embodiment of the present disclosure further provides an information processing apparatus for a terminal. The apparatus includes:
a first receiving unit, configured to receive physical-layer power-saving indication information transmitted by a network device; and
a first determining unit, configured to determine, based on the physical-layer power-saving indication information, whether to start a DRX on-duration timer of one or more target DRX configurations corresponding to the physical-layer power-saving indication information.

In a sixth aspect, an embodiment of the present disclosure further provides an information processing apparatus for a network device. The apparatus includes:
a first transmitting unit, configured to transmit physical-layer power-saving indication information to the terminal, where the physical-layer power-saving indication information is used for the terminal to determine whether to start a DRX on-duration timer of one or more target DRX configurations corresponding to the physical-layer power-saving indication information; and
a processing unit, configured to perform processing according to whether the one or more target DRX configurations are activated by the terminal.

In a seventh aspect, an embodiment of the present disclosure further provides a processor-readable storage medium, on which a computer program is stored. The computer program is configured to be executed by a processor to implement steps in the information processing method described above.

In an eighth aspect, an embodiment of the present disclosure further provides a computer-readable storage medium, on which a computer program is stored. The computer program is configured to be executed by a computer to implement steps in the information processing method described above.

In a ninth aspect, an embodiment of the present disclosure further provides a chip product, in which a computer program is stored. The computer program is configured to be executed by the chip product to implement steps in the information processing method described above.

In the embodiments of the present disclosure, a terminal determines, based on the physical-layer power-saving indication information, whether to start a DRX on-duration timer of one or more target DRX configurations corresponding to physical-layer power-saving indication information. The target DRX configuration includes a DRX configuration for a PTM transmission, or the target DRX configuration includes the DRX configuration for the PTM transmission and a DRX configuration for a PTP transmission. With the solution in the embodiments of the present disclosure, when multiple DRX configurations are configured for MBS services, the terminal can determine whether to start the DRX on-duration timers of one or more target DRX configurations by monitoring for only one piece of physical-layer power-saving indication information, and the terminal does not need to wake up frequently to perform monitoring, thereby reducing the power consumption of the terminal.

### BRIEF DESCRIPTION OF THE DRAWINGS

FIG. 1 is a schematic diagram of a DRX mechanism in a connected state in the related art;
FIG. 2 is a flowchart of an information processing method according to an embodiment of the present disclosure;
FIG. 3 is another flowchart of an information processing method according to an embodiment of the present disclosure;
FIG. 4 is yet another flowchart of an information processing method according to an embodiment of the present disclosure;
FIG. 5 is still another flowchart of an information processing method according to an embodiment of the present disclosure;
FIG. 6 is yet still another flowchart of an information processing method according to an embodiment of the present disclosure;
FIG. 7 is a structural diagram of an information processing apparatus according to an embodiment of the present disclosure;
FIG. 8 is another structural diagram of an information processing apparatus according to an embodiment of the present disclosure;
FIG. 9 is yet another structural diagram of an information processing apparatus according to an embodiment of the present disclosure; and
FIG. 10 is still another structural diagram of an information processing apparatus according to an embodiment of the present disclosure.

### DETAILED DESCRIPTION

The term "and/or" in the embodiments of the present disclosure describes the association relationship of associated objects and indicates that there may be three types of relationships. For example, A and/or B may represent three situations including: A alone, both A and B, and B alone. The character "/" generally indicates that the associated objects before and after the character are in an "or" relationship.

The term "multiple" used in the embodiments of the present disclosure refers to two or more, and other quantifiers are similar thereto.

In the following, technical solutions in embodiments of the present disclosure will be described in a clear and thorough manner with reference to the drawings in the embodiments of the present disclosure. Apparently, the described embodiments are merely a part of, rather than all of, the embodiments of the present disclosure. Based on the embodiments of the present disclosure, a person skilled in the art may, without creative effort, obtain other embodiments, all of which shall fall within the scope of the present disclosure.

For the DRX mechanism of unicast services, a wake-up mechanism is further introduced. The wake-up mechanism refers to monitoring for a physical-layer power-saving indication (DCP (DCI with CRC scrambled by PS-RNTI)) before a DRX on-duration timer (drx-onDurationTimer) of one DRX configuration is started. Specifically, the physical-layer power-saving indication is a downlink control information (DCI) whose cyclic redundancy check (CRC) is scrambled by power saving radio network temporary identifier (PS-RNTI). If it is determined based on the physical-layer power-saving indication that a subsequent drx-onDurationTimer is to be started, a terminal will start the drx-onDurationTimer; if it is determined based on the physical-layer power-saving indication that no subsequent drx-onDurationTimer is to be started, the terminal will not start a drx-onDurationTimer.

As set forth above, for MBS services, there may be multiple DRX configurations corresponding to different respective MRBs. If each DRX configuration is configured with one physical-layer power-saving monitoring mechanism, the terminal needs to frequently wake up to monitor for the physical-layer power-saving indications, thereby increasing the power consumption of the terminal. Therefore, it is necessary to propose a processing method for this scenario, to reduce the power consumption of the terminal.

Embodiments of the present disclosure provide an information processing method, an information processing apparatus and a readable storage medium, so as to reduce power consumption of a terminal. The method and the apparatus are based on the same creative concept. Since principles for the method and the apparatus to solve problems are similar to each other, for the implementations of the apparatus, reference may be made to the implementations of the method, and vice versa. Thus a repeated description will be omitted herein.

Referring to FIG. 2, FIG. 2 is a flowchart of an information processing method according to an embodiment of the present disclosure. As shown in FIG. 2, the method includes the following steps 201 and 202.

Step 201: receiving, by a terminal, physical-layer power-saving indication information transmitted by a network device.

In an embodiment of the present disclosure, specifically, the physical-layer power-saving indication information is DCP. In the subsequent description, physical-layer power-saving reference information is DCP configuration information, and a physical-layer power-saving configuration is a DCP configuration.

Step 202: determining, by the terminal based on the physical-layer power-saving indication information, whether to start a drx-onDurationTimer of one or more target DRX configurations corresponding to the physical-layer power-saving indication information.

The target DRX configuration includes a DRX configuration for a PTM transmission, or the target DRX configuration includes a DRX configuration for a PTM transmission and a DRX configuration for a PTP transmission.

In this case, the terminal may determine, based on the physical-layer power-saving indication information, whether to start or not to start drx-onDurationTimers of all the DRX configurations.

In order to achieve more refined control and reduce the power consumption of the terminal, in a specific application, the terminal may obtain physical-layer power-saving reference information predefined in a protocol or transmitted by the network device. The physical-layer power-saving reference information may also be referred to as physical-layer power-saving configuration information. The physical-layer power-saving reference information may include a physical-layer power-saving configuration and a mapping relationship between the physical-layer power-saving configuration and a DRX configuration. The physical-layer power-saving configuration may include a value of PS-RNTI used for the physical-layer power-saving indication information, to distinguish between different physical-layer power-saving indication information, so as to further determine whether to start a drx-onDurationTimer of a DRX configuration. In a practical application, the physical-layer power-saving reference information may include multiple DCP configurations, and for each of the DCP configurations, a mapping relationship between the DCP configuration and a DRX configuration may be established.

The mapping relationship includes any one or more of the following forms:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

In this case, the terminal may determine, based on the physical-layer power-saving indication information and the physical-layer power-saving reference information, whether to start the drx-onDurationTimer of one or more target DRX configurations.

Based on the above different forms of mapping relationships, the terminal may have different ways to determine whether to start the drx-onDurationTimer of one or more target DRX configurations.

For example, in a case where the mapping relationship is that one physical-layer power-saving configuration corresponds to all DRX configurations of one terminal, the terminal may determine, based on a DCP configuration and the mapping relationship, to start or not to start the drx-onDurationTimers of all the DRX configurations. For example, a network device configures three DRX configurations for a terminal, namely, DRX index1, DRX index2 and DRX index3; the PS-RNTI in the DCP configuration is: PS-RNTI=X1. If the terminal receives a DCP scrambled by PS-RNTI=X1, and the DCP indicates to start a drx-onDurationTimer, then the terminal will start the drx-onDurationTimers corresponding to the subsequent DRX index1, DRX index2 and DRX index3 after receiving the DCP.

For example, in a case where the mapping relationship is that one physical-layer power-saving configuration corresponds to a DRX configuration associated with one MBS service, the terminal may start or not start a drx-onDurationTimer of a target DRX configuration associated with a target MBS service based on a DCP configuration and the mapping relationship, wherein the target MBS service is determined based on the mapping relationship and the DCP configuration in the DCP configuration information. For example, a network device configures three DRX configurations for a terminal, namely, DRX index1, DRX index2 and DRX index3; the DRX index1 and the DRX index2 are associated with MBS service 1, and the DRX index3 is associated with MBS service 2; the PS-RNTI in a first DCP configuration is: PS-RNTI=X1, and the first DCP configuration is associated with MBS service 1, that is, associated with the DRX index1 and the DRX index2; the PS-RNTI in a second DCP configuration is: PS-RNTI=X2, and the second DCP configuration is associated with MBS service 2, that is, associated with the DRX index3. If the terminal receives a DCP scrambled by PS-RNTI=X1, and the DCP indicates to start a drx-onDurationTimer, then the terminal will start drx-onDurationTimers corresponding to the subsequent DRX index1 and DRX index2 after receiving the DCP. The drx-onDurationTimer corresponding to the DRX index3 is indicated by the second DCP configuration (PS-RNTI=X2).

For example, in a case where the mapping relationship is that one physical-layer power-saving configuration corresponds to a DRX configuration associated with one MBS session, the terminal may start or not start a drx-onDurationTimer of a target DRX configuration associated with a target MBS session based on a DCP configuration and the mapping relationship, where the target MBS session is determined based on the mapping relationship and the DCP configuration in the DCP configuration information. For example, a network device configures three DRX configurations for a terminal, namely, DRX index1, DRX index2 and DRX index3; the DRX index1 and the DRX index2 are associated with MBS session 1, and the DRX index3 is associated with MBS session 2; the PS-RNTI in a first DCP configuration is: PS-RNTI=X1, and the first DCP configuration is associated with MBS session 1, that is, associated with the DRX index1 and the DRX index2; the PS-RNTI in a second DCP configuration is: PS-RNTI=X2, and the second DCP configuration is associated with MBS session 2, that is, associated with the DRX index3. If the terminal receives a DCP scrambled by PS-RNTI=X1, and the DCP indicates to start a drx-onDurationTimer, then the terminal will start drx-onDurationTimers corresponding to the subsequent DRX index1 and DRX index2 after receiving the DCP. The drx-onDurationTimer corresponding to the DRX index3 is indicated by the second DCP configuration (PS-RNTI=X2).

For example, in a case where the mapping relationship is that one physical-layer power-saving configuration corresponds to a DRX configuration with a specified DRX index, or that one physical-layer power-saving configuration corresponds to a DRX configuration associated with one Group-RNTI, the terminal may start or not start a drx-onDurationTimer of a first target DRX configuration based on the DCP configuration and the mapping relationship, wherein a configuration index of the first target DRX configuration is the specified DRX index, or the first target DRX configuration is the DRX configuration associated with the Group-RNTI. For example, a network device configures three DRX configurations for a terminal, namely, DRX index1, DRX index2 and DRX index3; the PS-RNTI in a first DCP configuration is: PS-RNTI=X1, and the first DCP configuration is associated with the DRX index1 and the DRX index2; the PS-RNTI in a second DCP configuration is: PS-RNTI=X2, and the second DCP configuration is associated with the DRX index3. If the terminal receives a DCP scrambled by PS-RNTI=X1, and the DCP indicates to start a drx-onDurationTimer, then the terminal will start drx-onDurationTimers corresponding to the subsequent DRX index1 and DRX index2 after receiving the DCP. The drx-onDurationTimer corresponding to the DRX index3 is indicated by the second DCP configuration (PS-RNTI=X2).

Optionally, the physical-layer power-saving configuration may further include indication information which is used for indicating whether a DCI bearing the physical-layer power-saving indication information carries a DRX index, and/or used for indicating a correspondence between a specified flag bit in the DCI and the DRX index. In this case, the terminal may start or not start a drx-onDurationTimer of a second target DRX configuration, based on the physical-layer power-saving indication information, the DCP configuration, the mapping relationship and the first indication information, wherein a configuration index of the second target DRX configuration is a DRX index indicated by a DCI bearing the physical-layer power-saving indication information. The indication as to whether the DRX index is carried may be implemented through a bitmap or a specific value. For example, a network device configures three DRX configurations for a terminal, namely, DRX index1, DRX index2 and DRX index3; the PS-RNTI in a DCP configuration is: PS-RNTI=X1, and the DCP configuration corresponds to the DRX index1, the DRX index2 and the DRX index3; the network device configures a DCI field of a DCP to carry the indication of DRX index. If the terminal receives a DCP scrambled by PS-RNTI=X1, and the DCP further indicates to start drx-onDurationTimers corresponding to the DRX index1 and the DRX index2, then the terminal will start the drx-onDurationTimers corresponding to the subsequent DRX index1 and DRX index2 after receiving the DCP.

Specifically, if the indication of the DRX index is not carried, then the terminal determines, based on the physical-layer power-saving reference information and the like, whether to start the drx-onDurationTimer of one or more target DRX configurations corresponding to the physical-layer power-saving indication information. If the indication of the DRX index is carried, then the terminal determines, based on a correspondence between an indication information bit and the DRX index, and the like, which drx-onDurationTimers of DRX configurations are to be started or not to be started. In other words, if only the correspondence between the indication information bit in the DCI and the DRX index is carried, the terminal may also determine, based on the correspondence between the indication information bit and the DRX index, which drx-onDurationTimers of DRX configurations are to be started or not to be started. Thus, more precise control of DRX configurations can be achieved in this manner.

Optionally, the physical-layer power-saving configuration may further include other information, such as one or more of: an effective duration of the physical-layer power-saving indication information, and a quantity of DRX configurations for which the physical-layer power-saving indication information is in effect. Thus, more precise control of DRX configurations can be achieved in this manner.

The effective duration of the physical-layer power-saving indication information may be understood as a duration in which the physical-layer power-saving indication information is effective; the quantity of DRX configurations for which the physical-layer power-saving indication information is in effect may be understood as the quantity of DRX configurations for which the physical-layer power-saving indication information is effective. If the physical-layer power-saving reference information further includes the above content, then in embodiments of the present disclosure, in the aforementioned determination manners, the terminal may further take the above content into account in determining which drx-onDurationTimers of DRX configurations are to be started or not to be started.

Specifically, the terminal may perform the following processing:
in case that the terminal determines, based on the DCP configuration and the mapping relationship, to start or not to start drx-onDurationTimers of all DRX configurations, starting or not starting, by the terminal, the drx-onDurationTimers of all the DRX configurations within the effective duration of the physical-layer power-saving indication information or the defined quantity of DRX configurations for which the physical-layer power-saving indication information is in effect;
in case that the terminal determines, based on the DCP configuration and the mapping relationship, to start or not to start a drx-onDurationTimer of a target DRX configuration associated with a target MBS service or a target MBS session, starting or not starting, by the terminal, the drx-onDurationTimer of the target DRX configuration associated with the target MBS service or the target MBS session within the effective duration of the physical-layer power-saving indication information or the defined quantity of DRX configurations for which the physical-layer power-saving indication information is in effect;
in case that the terminal determines, based on the DCP configuration and the mapping relationship, to start or not to start a drx-onDurationTimer of a second target DRX configuration, starting or not starting, by the terminal, the drx-onDurationTimer of the second target DRX configuration within the effective duration of the physical-layer power-saving indication information or the defined quantity of DRX configurations for which the physical-layer power-saving indication information is in effect.

Specifically, when performing processing based on the effective duration of the physical-layer power-saving indication information and the quantity of DRX configurations for which the physical-layer power-saving indication information is in effect, the terminal may perform any one or more of the following:
starting or not starting, by the terminal, the drx-onDurationTimers of all the DRX configurations within the effective duration of the physical-layer power-saving indication information;
starting or not starting, by the terminal, a first target quantity of drx-onDurationTimers within the defined quantity of DRX configurations for which the physical-layer power-saving indication information is in effect, where the first target quantity is related to the quantity of DRX configurations for which the physical-layer power-saving indication information is in effect; the first target quantity is less than or equal to the quantity of DRX configurations for which the physical-layer power-saving indication information is in effect; for example, the first target quantity may be equal to the quantity of DRX configurations for which the physical-layer power-saving indication information is in effect; assuming that the quantity of DRX configurations for which the physical-layer power-saving indication information is in effect is 3, the terminal may determine to start or not to start three consecutive drx-onDurationTimers;
starting or not starting, by the terminal, a drx-onDurationTimer of a target DRX configuration associated with a target MBS service or a target MBS session within the effective duration of the physical-layer power-saving indication information;
starting or not starting, by the terminal, a second target quantity of drx-onDurationTimers associated with the target MBS service or the target MBS session within the defined quantity of DRX configurations for which the physical-layer power-saving indication information is in effect, where the second target quantity is related to the quantity of DRX configurations for which the physical-layer power-saving indication information is in effect; the second target quantity is less than or equal to the quantity of DRX configurations for which the physical-layer power-saving indication information is in effect; for example, the second target quantity may be equal to the quantity of DRX configurations for which the physical-layer power-saving indication information is in effect; assuming that the quantity of DRX configurations for which the physical-layer power-saving indication information is in effect is 3, the terminal may determine to start or not to start three drx-onDurationTimers associated with the target MBS service or the target MBS session;
starting or not starting, by the terminal, the drx-onDurationTimer of the second target DRX configuration within the effective duration of the physical-layer power-saving indication information;
starting or not starting, by the terminal, drx-onDurationTimers of a third target quantity of second target DRX configurations within the defined quantity of DRX configurations for which the physical-layer power-saving indication information is in effect, where the third target quantity is related to the quantity of DRX configurations for which the physical-layer power-saving indication information is in effect; the third target quantity is less than or equal to the quantity of DRX configurations for which the physical-layer power-saving indication information is in effect; for example, the third target quantity may be equal to the quantity of DRX configurations for which the physical-layer power-saving indication information is in effect; assuming that the quantity of DRX configurations for which the physical-layer power-saving indication information is in effect is 3, the terminal may determine to start or not to start drx-onDurationTimers of three second target DRX configurations.

In the embodiments of the present disclosure, the terminal determines whether to start drx-onDurationTimers of one or more target DRX configurations corresponding to the physical-layer power-saving indication information, based on the physical-layer power-saving indication information. The target DRX configuration includes a DRX configuration for a PTM transmission, or the target DRX configuration includes a DRX configuration for a PTM transmission and a DRX configuration for a PTP transmission. With the solution in the embodiments of the present disclosure, when multiple DRX configurations are configured for MBS services, the terminal can determine whether to start the DRX on-duration timers of one or more target DRX configurations by monitoring for only one piece of physical-layer power-saving indication information, and the terminal does not need to wake up frequently to perform monitoring, thereby reducing the power consumption of the terminal.

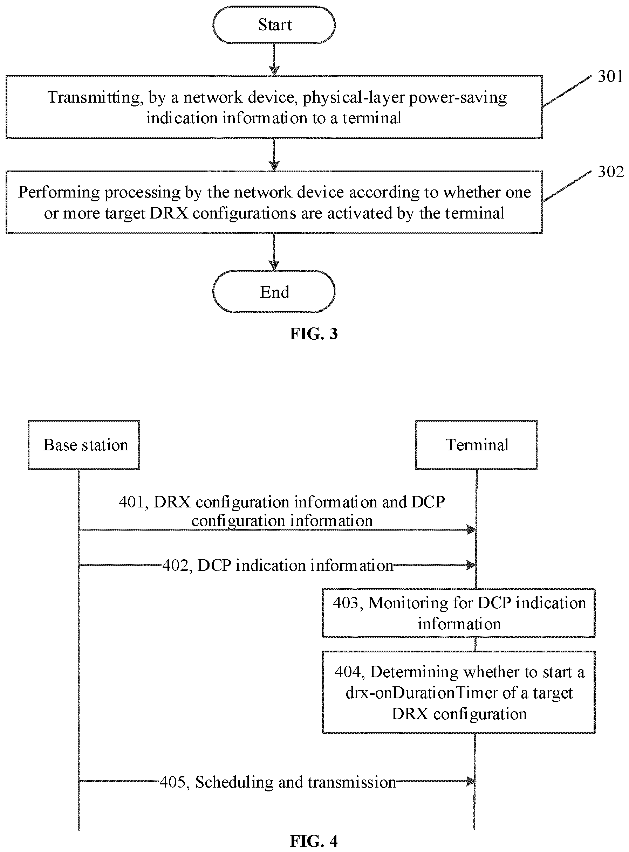

Referring to FIG. 3, FIG. 3 is a flowchart of an information processing method according to an embodiment of the present disclosure. As shown in FIG. 3, the method includes the following steps 301 and 302.

Step 301: transmitting, by a network device, physical-layer power-saving indication information to a terminal, where the physical-layer power-saving indication information is used for the terminal to determine whether to start a drx-onDurationTimer of one or more target DRX configurations corresponding to the physical-layer power-saving indication information.

In the embodiment of the present disclosure, the network device may be, for example, a base station. The physical-layer power-saving indication information may be DCP. In the subsequent description, physical-layer power-saving reference information may be DCP configuration information, and a physical-layer power-saving configuration may be a DCP configuration.

Step 302: performing processing by the network device according to whether the one or more target DRX configurations are activated by the terminal.

Specifically, in this step, if the target DRX configuration is activated, the network device may perform scheduling for the terminal, data transmission to the terminal and the like based on the activation of the target DRX configuration by the terminal.

The target DRX configuration includes a DRX configuration for a PTM transmission, or the target DRX configuration includes a DRX configuration for a PTM transmission and a DRX configuration for a PTP transmission.

The mapping relationship between the physical-layer power-saving configuration and a DRX configuration includes any one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes indication information, used for indicating whether a DCI bearing the physical-layer power-saving indication information carries a DRX index, and/or used for indicating a correspondence between a specified flag bit in the DCI and the DRX index, so that the terminal may more precisely determine a drx-onDurationTimer of a DRX configuration that needs to be started or does not need to be started, thereby further reducing the power consumption of the terminal.

Optionally, the physical-layer power-saving configuration also includes one or more of the following information: an effective duration of the physical-layer power-saving indication information, and a quantity of DRX configurations for which the physical-layer power-saving indication information is in effect. With the information, the terminal may more precisely determine a drx-onDurationTimer of a DRX configuration that needs to be started or does not need to be started, thereby further reducing the power consumption of the terminal.

In the embodiments of the present disclosure, the terminal determines whether to start drx-onDurationTimers of one or more target DRX configurations corresponding to the physical-layer power-saving indication information, based on the physical-layer power-saving indication information. The target DRX configuration includes a DRX configuration for a PTM transmission, or the target DRX configuration includes a DRX configuration for a PTM transmission and a DRX configuration for a PTP transmission. With the solution in the embodiments of the present disclosure, when multiple DRX configurations are configured for MBS services, the terminal can determine whether to start the DRX on-duration timers of one or more target DRX configurations by monitoring for only one piece of physical-layer power-saving indication information, and the terminal does not need to wake up frequently to perform monitoring, thereby reducing the power consumption of the terminal.

Referring to FIG. 4, FIG. 4 is a flowchart of an information processing method according to an embodiment of the present disclosure. As shown in FIG. 4, the method includes the following steps 401 to 405.

Step 401: a network device (such as a base station) transmits DRX configuration information and DCP configuration information to a terminal.

The DCP configuration information (also referred to as DCP reference information) may include a DCP configuration, and a mapping relationship between the DCP configuration and a DRX configuration. Optionally, the DCP configuration may include: indication information used for indicating whether a DCI bearing DCP indication information carries a DRX index, a correspondence between an indication information bit in the DCI and the DRX index, an effective duration of the DCP indication information, the quantity of DRX configurations for which DCP is in effect, a PS-RNTI value applied to the DCP indication information, and the like. The DCP configuration may include the PS-RNTI value applied to the DCP indication information, to distinguish between different DCP indication information. The DRX configuration information may include a DRX configuration.

In the embodiment, the mapping relationship may be that one DCP configuration corresponds to all DRX configurations of one terminal.

Step 402: within a transmission time of the DCP configuration, the base station transmits DCP indication information to the terminal based on whether a DRX configuration of the terminal needs to be activated.

Step 403: the terminal monitors, according to the DCP configuration, for a DCI carrying PS-RNTI, namely, the DCP indication information, at a moment specified by the DCP configuration. The DCI is carried through a PDCCH.

Step 404: if the DCI is detected, the terminal may determine whether to start a drx-onDurationTimer of a target DRX configuration.

Specifically, the terminal may perform any one of the following steps.

In a case that the DCP indication information only includes a DCP configuration and a mapping relationship, the terminal may determine whether to start drx-onDurationTimers of all DRX configurations of the terminal based on whether the DCP indication information indicates to activate DRX. For example, if the DCP indication information indicates to activate DRX, then the drx-onDurationTimers of all the DRX configurations of the terminal are started, otherwise they are not started.

Further, in a case that the DCP indication information further includes indication information, the terminal may determine whether to start a drx-onDurationTimer of a DRX configuration indicated by the indication information based on whether the DCP indication information indicates to activate DRX. An index of the DRX configuration is a DRX index indicated by the indication information. For example, if the DCP indication information indicates to activate DRX, the drx-onDurationTimer of the DRX configuration indicated by the indication information is started, otherwise it is not started.

Further, in a case that the DCP indication information further includes an effective duration of the DCP indication information, the terminal starts or does not start the drx-onDurationTimers of all the DRX configurations within the effective duration of the DCP indication information. That is to say, in this case, the drx-onDurationTimers of the DRX configurations that are started or not started by the terminal are within the effective duration of the DCP indication information.

Further, in a case that the DCP indication information further includes a quantity of DRX configurations for which the DCP is in effect, the terminal starts or does not start the drx-onDurationTimers of all DRX configurations within the quantity of DRX configurations for which the DCP is in effect. That is to say, in this case, the quantity of drx-onDurationTimers of DRX configurations that are started or not started by the terminal is limited by the quantity of DRX configurations for which the DCP is in effect.

Step 405: the base station performs scheduling and transmission to the terminal according to whether a DRX is activated by the terminal.

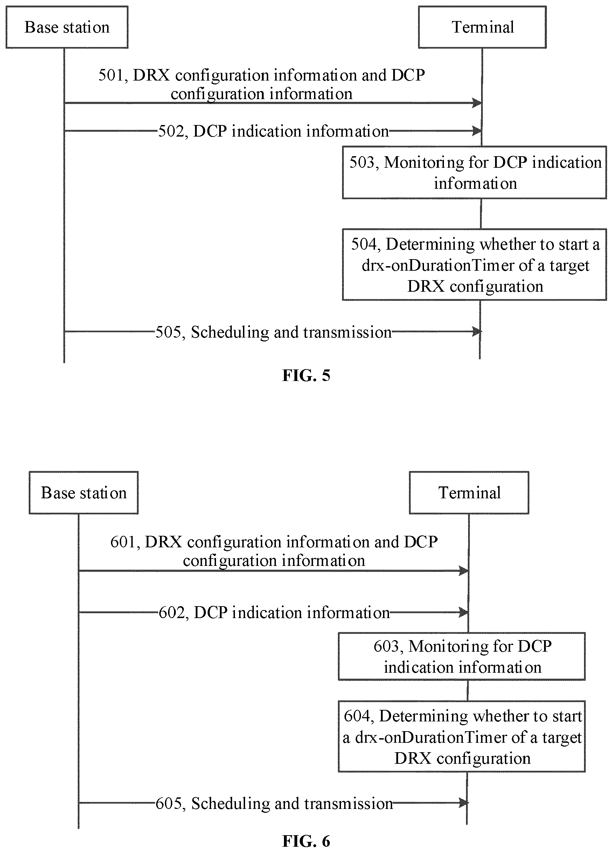

Referring to FIG. 5, FIG. 5 is a flowchart of an information processing method according to an embodiment of the present disclosure. As shown in FIG. 5, the method includes the following steps 501 to 505.

Step 501: a network device (such as a base station) transmits DRX configuration information and DCP configuration information to a terminal.

The DCP configuration information (also referred to as DCP reference information) may include a DCP configuration, and a mapping relationship between the DCP configuration and a DRX configuration. Optionally, the DCP configuration may include: indication information used for indicating whether a DCI bearing DCP indication information carries a DRX index indication, a correspondence between an indication information bit in the DCI and the DRX index, an effective duration of the DCP indication information, the quantity of DRX configurations for which DCP is in effect, a PS-RNTI value applied to the DCP indication information, and the like. The DCP configuration may include the PS-RNTI value applied to the DCP indication information, to distinguish between different DCP indication information. The DRX configuration information may include a DRX configuration.

In an embodiment, the mapping relationship may be that one DCP configuration corresponds to all DRX configurations for one MBS service or one MBS session.

Step 502: within a transmission time of the DCP configuration, the base station transmits DCP indication information to the terminal based on whether a DRX configuration of the terminal needs to be activated.

Step 503: the terminal monitors, according to the DCP configuration, for a DCI carrying PS-RNTI, namely, the DCP indication information, at a moment designated by the DCP configuration. The DCI is carried through a PDCCH.

Step 504: if the DCI is detected, the terminal may determine whether to start a drx-onDurationTimer of a target DRX configuration.

Specifically, the terminal may perform any one of the following steps.

In a case that the DCP indication information only includes a DCP configuration and a mapping relationship, the terminal may determine whether to start drx-onDurationTimers of all DRX configurations for a MBS service or a MBS session corresponding to the DCP configuration, based on whether the DCP indication information indicates to activate DRX. For example, if the DCP indication information indicates to activate DRX, the drx-onDurationTimers of all the DRX configurations for the MBS service or the MBS session corresponding to the DCP configuration are started, otherwise they are not started.

Further, in a case that the DCP indication information further includes indication information, the terminal may determine whether to start a drx-onDurationTimer of a DRX configuration that is indicated by the indication information and for the MBS service or the MBS session corresponding to the DCP configuration, based on whether the DCP indication information indicates to activate DRX. An index of the DRX configuration is a DRX index indicated by the indication information. For example, if the DCP indication information indicates to activate DRX, the drx-onDurationTimer of the DRX configuration indicated by the indication information is started, otherwise it is not started.

Further, in a case that the DCP indication information further includes an effective duration of the DCP indication information, the terminal starts or does not start the drx-onDurationTimers of all the DRX configurations for the MBS service or the MBS session corresponding to the DCP configuration, within the effective duration of the DCP indication information. That is to say, in this case, the terminal starts or does not start the drx-onDurationTimers of the DRX configurations for the MBS service or the MBS session corresponding to the DCP configuration that are within the effective duration of the DCP indication information.

Further, in a case that the DCP indication information further includes a quantity of DRX configurations for which the DCP is in effect, the terminal starts or does not start the drx-onDurationTimers of all the DRX configurations for the MBS service or the MBS session corresponding to the DCP configuration, within the quantity of DRX configurations for which the DCP indication information is in effect. That is to say, in this case, the quantity of drx-onDurationTimers of DRX configurations that are started or not started by the terminal is limited by the quantity of DRX configurations for which the DCP is in effect.

Step 505: the base station performs scheduling and transmission to the terminal according to whether a DRX is activated by the terminal.

Referring to FIG. 6, FIG. 6 is a flowchart of an information processing method according to an embodiment of the present disclosure. As shown in FIG. 6, the method includes the following steps 601 to 605.

Step 601: a network device (such as a base station) transmits DRX configuration information and DCP configuration information to a terminal.

The DCP configuration information (also referred to as DCP reference information) may include a DCP configuration, and a mapping relationship between the DCP configuration and a DRX configuration. In the embodiment, the mapping relationship may be that one DCP configuration corresponds to a DRX configuration with a specified DRX index, or that one DCP configuration corresponds to a DRX configuration associated with one Group-RNTI. The DCP configuration may include a PS-RNTI value applied to the DCP indication information, to distinguish between different DCP indication information.

Step 602: within a transmission time of the DCP configuration, the base station transmits DCP indication information to the terminal based on whether a DRX configuration of the terminal needs to be activated.

Step 603: the terminal monitors, according to the DCP configuration, for a DCI carrying PS-RNTI, namely, the DCP indication information, at a moment specified by the DCP configuration. The DCI is carried through a PDCCH.

Step 604: if the DCI is detected, the terminal may determine whether to start a drx-onDurationTimer of a target DRX configuration.

Specifically, the terminal may determine whether to start a drx-onDurationTimer of a DRX configuration with a specified DRX index, or whether to start a drx-onDurationTimer of a DRX configuration associated with a Group-RNTI, based on whether the DCP indication information indicates to activate DRX. For example, if the DCP indication information indicates to activate DRX, the drx-onDurationTimer of the DRX configuration with the specified DRX index is started, otherwise it is not started.

Step 605: the base station performs scheduling and transmission to the terminal according to whether a DRX is activated by the terminal.

From the above embodiments, it can be seen that by using the solution in the embodiments of the present disclosure, a mapping relationship between DCP configuration and DRX configuration can be reasonably designed in the case that there are multiple DRX configurations, to enable the terminal to start or not to start drx-onDurationTimers of multiple DRX configurations by only monitoring for a small amount of DCPs, thereby achieving the objective of power saving of the terminal.

The technical solution according to the embodiments of the present disclosure may be applied to various systems, particularly to a 5G system. For example, an applicable system may be a global system of mobile communication (GSM) system, a code division multiple access (CDMA) system, a wideband code division multiple access (WCDMA) system, a general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G New Radio (NR) system, and the like. Each of the various systems includes a terminal and a network device. The systems may further include a core network portion, such as an evolved packet system (EPS), or a 5G system (5GS).

The terminal involved in the embodiments of the present disclosure may be a device that provides voice and/or data connectivity to a user, a handheld device with a radio connection function, or other processing devices connected to a radio modem or the like. In different systems, the names of terminal may be different. For example, in a 5G system, a terminal may be referred to as user equipment (UE). A wireless terminal can communicate with one or more core networks (CNs) via a radio access network (RAN), and the wireless terminal may be a mobile terminal, such as a mobile phone (or referred to as "cellular" phone) and a computer provided with a mobile terminal, such as a portable, pocket-sized, hand-held, computer built-in or vehicle-mounted mobile apparatus, which exchange voice and/or data with the radio access network. For example, personal communication service (PCS) phones, cordless phones, session initiated protocol (SIP) phones, wireless local loop (WLL) stations, personal digital assistants (PDAs) and other devices. The wireless terminal may also be referred to as a system, subscriber unit, subscriber station, mobile station, mobile, remote station, access point, remote terminal, access terminal, user terminal, user agent and user device, which are not limited in the embodiments of the present disclosure.

The network device involved in the embodiments of the present disclosure may be a base station. The base station may include multiple cells that provide services to terminals. Depending on the specific application scenario, the base station may be called access point, or may be a device in the access network that communicates over an air interface with wireless terminal devices through one or more sectors, or may be called another name. The network device may be used for converting the received radio frames into Internet protocol (IP) packets or vice versa, and serves as a router between the wireless terminals and the rest of the access network. The rest of the access network may include an IP communication network. The network device may also coordinate the attribute management of the air interface. For example, the network device involved in the embodiments of the present disclosure may be a base transceiver station (BTS) in the global system for mobile communications (GSM) or code division multiple access (CDMA), a NodeB in the wide-band code division multiple access (WCDMA), an evolved Node B (eNB or e-NodeB) in long term evolution (LTE) system, a 5G base station (gNB) in 5G network architecture (next generation system), a home evolved Node B (HeNB), a relay node, a femto, a pico, or the like, which is not limited herein. In some network architectures, the network device may include a centralized unit (CU) node and a distributed unit (DU) node, which may be geographically separated.

The network device and the terminal may each perform multi-input multi-output (MIMO) transmission with each other by using one or more antennas. The MIMO transmission may be single user MIMO (SU-MIMO) or multiple user MIMO (MU-MIMO). According to the configuration and quantity of antenna combinations, the MIMO transmission may be 2 dimensional-MIMO (2D-MIMO), 3 dimensional-MIMO (3D-MIMO), full dimensional-MIMO (FD-MIMO) or massive-MIMO, and may be diversity transmission, pre-coded transmission, beam forming transmission, or the like.

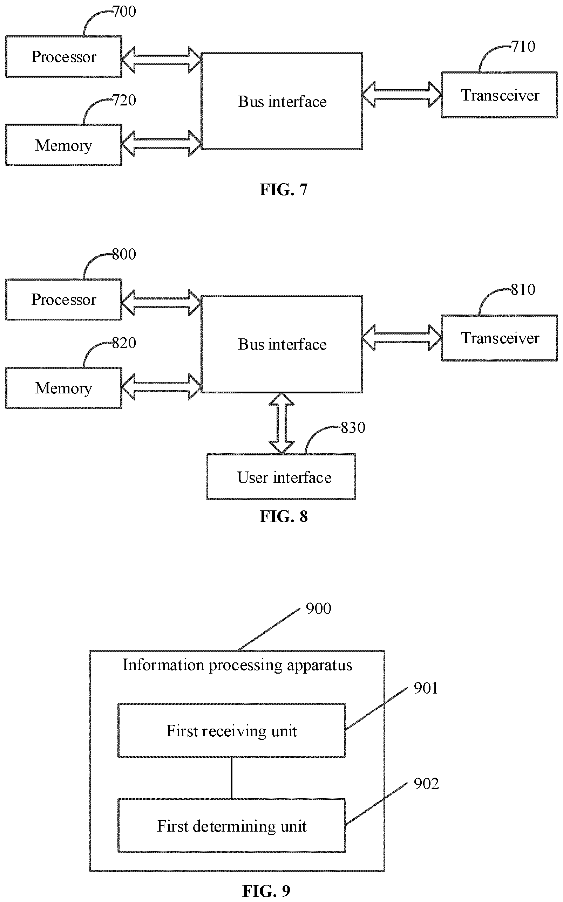

As shown in FIG. 7, an information processing apparatus is provided according to an embodiment of the present disclosure, which is applied to a network device. The apparatus includes a processor 700 configured to read a program from a memory 720 to execute the following steps:
transmitting physical-layer power-saving indication information to a terminal, where the physical-layer power-saving indication information is used for the terminal to determine whether to start a drx-onDurationTimer of one or more target DRX configurations corresponding to the physical-layer power-saving indication information; and
performing processing by the network device according to whether the one or more target DRX configurations are activated by the terminal.

A transceiver 710 is configured to receive and transmit data under the control of the processor 700.

In FIG. 7, the bus architecture may include any number of interconnected buses and bridges, and connects various circuits including one or more processors represented specifically by the processor 700 and memory represented by the memory 720. The bus architecture may also link various other circuits such as peripheral devices, voltage regulators, power management circuits, etc., which are well-known in the art, and therefore, no further descriptions are provided herein. The bus interface provides an interface. The transceiver 710 may be a plurality of elements, that is, include a transmitter and a receiver, and provide a unit for communicating with various other devices on a transmission medium. The processor 700 is responsible for managing the bus architecture and general processing, and the memory 720 may store data used by the processor 700 when performing operations.

The processor 710 may be a central processing unit (CPU), application specific integrated circuit (ASIC), field-programmable gate array (FPGA), or complex programmable logic device (CPLD), and the processor may also adopt a multi-core architecture.

The processor 700 is responsible for managing the bus architecture and general processing, and the memory 720 may store data used by the processor 700 when performing operations.

Optionally, the processor 700 is further configured to transmit physical-layer power-saving reference information to the terminal, where the physical-layer power-saving reference information includes a physical-layer power-saving configuration and a mapping relationship between the physical-layer power-saving configuration and a DRX configuration.

Optionally, the target DRX configuration includes a DRX configuration for a PTM transmission, or the target DRX configuration includes the DRX configuration for the PTM transmission and a DRX configuration for a PTP transmission.

Optionally, the mapping relationship between physical-layer power-saving configuration and DRX configuration includes any one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index.

Optionally, the physical-layer power-saving configuration further includes one or more of the following information: an effective duration of the physical-layer power-saving indication information, and a quantity of DRX configurations for which the physical-layer power-saving indication information is in effect.

It should be noted that the above apparatus provided in the embodiment of the present disclosure can implement all method steps implemented by the network device in the above method embodiments, and can achieve the same technical effects. Therefore, the description and beneficial effects of this embodiment that are the same as the method embodiments will not be described here in detail.

As shown in FIG. 8, an information processing apparatus is provided according to an embodiment of the present disclosure, which is applied to a terminal. The apparatus includes a processor 800 configured to read a program from a memory 820 to execute the following steps:
receiving physical-layer power-saving indication information transmitted by a network device; and
determining, based on the physical-layer power-saving indication information, whether to start a drx-onDurationTimer of one or more target DRX configurations corresponding to the physical-layer power-saving indication information.

Optionally, the target DRX configuration includes a DRX configuration for a PTM transmission, or the target DRX configuration includes the DRX configuration for the PTM transmission and a DRX configuration for a PTP transmission.

The transceiver 810 is configured to receive and transmit data under the control of the processor 800.

In FIG. 8, the bus architecture may include any number of interconnected buses and bridges, and connects various circuits including one or more processors represented specifically by the processor 800 and memory represented by the memory 820. The bus architecture may also link various other circuits such as peripheral devices, voltage regulators, power management circuits, etc., which are well-known in the art, and therefore, no further descriptions are provided herein. The bus interface provides an interface. The transceiver 810 may be a plurality of elements, that is, include a transmitter and a receiver, and provide a unit for communicating with various other devices on a transmission medium. For different user equipment, the user interface 830 may also be an interface capable of externally or internally connecting to required equipment. The connected equipment includes but not limited to a keypad, a display, a speaker, a microphone, a joystick, and the like.

The processor 800 is responsible for managing the bus architecture and general processing, and the memory 820 may store data used by the processor 800 when performing operations.

The processor 810 may be a central processing unit (CPU), application specific integrated circuit (ASIC), field-programmable gate array (FPGA), or complex programmable logic device (CPLD), and the processor may also adopt a multi-core architecture.

The processor is configured to invoke a computer program stored in the memory, and execute any one of the methods provided in the embodiments of the present disclosure according to the obtained executable instructions. The processor and the memory may also be physically separated

The processor 800 is further configured to read the program to perform the following steps: receiving physical-layer power-saving reference information transmitted by the network device, where the physical-layer power-saving reference information includes a physical-layer power-saving configuration and a mapping relationship between physical-layer power-saving configuration and DRX configuration; where the physical-layer power-saving configuration includes a PS-RNTI value, and different PS-RNTI values correspond to different respective physical-layer power-saving indication information.

The processor 800 is further configured to read the program to perform the following steps: determining whether to start the drx-onDurationTimer of one or more target DRX configurations based on the physical-layer power-saving indication information and the physical-layer power-saving reference information.

Optionally, the mapping relationship includes any one or more of the following forms:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index. The processor 800 is further configured to determine, based on the physical-layer power-saving indication information, the physical-layer power-saving configuration, the mapping relationship between the physical-layer power-saving configuration and a DRX configuration, and the indication information, whether to start the drx-onDurationTimer of one or more target DRX configurations.

The processor 800 is further configured to read the program to perform the following steps:
starting or not starting drx-onDurationTimers of all the DRX configurations;
starting or not starting a drx-onDurationTimer of a target DRX configuration associated with a target MBS service or a target MBS session;
starting or not starting a drx-onDurationTimer of a first target DRX configuration, where a configuration index of the first target DRX configuration or a Group-RNTI associated with the first target DRX configuration corresponds to the physical-layer power-saving configuration;
starting or not starting a drx-onDurationTimer of a second target DRX configuration, where a configuration index of the second target DRX configuration is a DRX index indicated by the DCI bearing the physical-layer power-saving indication information.

Optionally, the physical-layer power-saving configuration further includes one or more of the following information: an effective duration of the physical-layer power-saving indication information, and a quantity of DRX configurations for which the physical-layer power-saving indication information is in effect.

The processor 800 is further configured to read the program to perform one or more of the following:
starting or not starting, by the terminal, the drx-onDurationTimers of all the DRX configurations within the effective duration of the physical-layer power-saving indication information;
starting or not starting, by the terminal, a first target quantity of drx-onDurationTimers within the defined quantity of DRX configurations for which the physical-layer power-saving indication information is in effect, where the first target quantity is related to the quantity of DRX configurations for which the physical-layer power-saving indication information is in effect;
starting or not starting, by the terminal, a drx-onDurationTimer of a target DRX configuration associated with a target MBS service or a target MBS session within the effective duration of the physical-layer power-saving indication information;
starting or not starting, by the terminal, a second target quantity of drx-onDurationTimers associated with the target MBS service or the target MBS session within the defined quantity of DRX configurations for which the physical-layer power-saving indication information is in effect, where the second target quantity is related to the quantity of DRX configurations for which the physical-layer power-saving indication information is in effect;
starting or not starting, by the terminal, a drx-onDurationTimer of a second target DRX configuration within the effective duration of the physical-layer power-saving indication information;
starting or not starting, by the terminal, drx-onDurationTimers of a third target quantity of second target DRX configurations within the defined quantity of DRX configurations for which the physical-layer power-saving indication information is in effect, where the third target quantity is related to the quantity of DRX configurations for which the physical-layer power-saving indication information is in effect.

It should be noted that the above apparatus provided in the embodiment of the present disclosure can implement all method steps implemented by the terminal in the above method embodiments, and can achieve the same technical effects. Therefore, the description and beneficial effects of this embedment that are the same as the method embodiments will not be described here in detail.

As shown in FIG. 9, an embodiment of the present disclosure provides an information processing apparatus, applied to a terminal, includes: a first receiving unit 901, configured to receive physical-layer power-saving indication information transmitted by a network device; and a first determining unit 902, configured to determine, based on the physical-layer power-saving indication information, whether to start a drx-onDurationTimer of one or more target DRX configurations corresponding to the physical-layer power-saving indication information.

Optionally, the target DRX configuration includes a DRX configuration for a PTM transmission, or the target DRX configuration includes the DRX configuration for the PTM transmission and a DRX configuration for a PTP transmission.

Optionally, the apparatus may further include: a second receiving unit, configured to receive physical-layer power-saving reference information transmitted by the network device, where the physical-layer power-saving reference information includes a physical-layer power-saving configuration and a mapping relationship between the physical-layer power-saving configuration and a DRX configuration; where the physical-layer power-saving configuration includes a value of a PS-RNTI, and different PS-RNTI values correspond to different respective physical-layer power-saving indication information.

Optionally, the first determining unit 902 is configured to determine, based on the physical-layer power-saving indication information and the physical-layer power-saving reference information, whether to start the drx-onDurationTimer of one or more target DRX configurations.

Optionally, the mapping relationship includes any one or more of the following forms:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, which is used for indicating whether a DCI bearing the physical-layer power-saving indication information carries a DRX index, and/or used for indicating a correspondence between a specified flag bit in the DCI and the DRX index. The first determining unit 902 is configured to determine, based on the physical-layer power-saving indication information, the physical-layer power-saving configuration, the mapping relationship between the physical-layer power-saving configuration and a DRX configuration, and the indication information, whether to start the drx-onDurationTimer of one or more target DRX configurations.

Optionally, the first determining unit 902 is further configured to perform any one or more of the following:
starting or not starting drx-onDurationTimers of all the DRX configurations;
starting or not starting a drx-onDurationTimer of a target DRX configuration associated with a target MBS service or a target MBS session;
starting or not starting a drx-onDurationTimer of a first target DRX configuration, where a configuration index of the first target DRX configuration or a Group-RNTI associated with the first target DRX configuration corresponds to the physical-layer power-saving configuration;
starting or not starting a drx-onDurationTimer of a second target DRX configuration, where a configuration index of the second target DRX configuration is a DRX index indicated by the DCI bearing the physical-layer power-saving indication information.

Optionally, the physical-layer power-saving configuration further includes one or more of the following information: an effective duration of the physical-layer power-saving indication information, and a quantity of DRX configurations for which the physical-layer power-saving indication information is in effect.

Optionally, the first determining unit 902 is further configured to perform any one of the following:
starting or not starting, by the terminal, the drx-onDurationTimers of all the DRX configurations within the effective duration of the physical-layer power-saving indication information;
starting or not starting, by the terminal, a first target quantity of drx-onDurationTimers within the defined quantity of DRX configurations for which the physical-layer power-saving indication information is in effect, where the first target quantity is related to the quantity of DRX configurations for which the physical-layer power-saving indication information is in effect;
starting or not starting, by the terminal, a drx-onDurationTimer of a target DRX configuration associated with a target MBS service or a target MBS session within the effective duration of the physical-layer power-saving indication information;
starting or not starting, by the terminal, a second target quantity of drx-onDurationTimers associated with the target MBS service or the target MBS session within the defined quantity of DRX configurations for which the physical-layer power-saving indication information is in effect, where the second target quantity is related to the quantity of DRX configurations for which the physical-layer power-saving indication information is in effect;
starting or not starting, by the terminal, a drx-onDurationTimer of a second target DRX configuration within the effective duration of the physical-layer power-saving indication information;
starting or not starting, by the terminal, drx-onDurationTimers of a third target quantity of second target DRX configurations within the defined quantity of DRX configurations for which the physical-layer power-saving indication information is in effect, where the third target quantity is related to the quantity of DRX configurations for which the physical-layer power-saving indication information is in effect.

It should be noted that the above apparatus provided in the embodiment of the present disclosure can implement all method steps implemented by the terminal in the above method embodiments, and can achieve the same technical effects. Therefore, the description and beneficial effects of this embedment that are the same as the method embodiments will not be described here in detail.

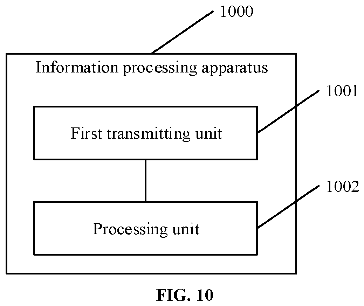

As shown in FIG. 10, an embodiment of the present disclosure provides an information processing apparatus, applied to a network device, includes: a first transmitting unit 1001, configured to transmit physical-layer power-saving indication information to a terminal, where the physical-layer power-saving indication information is used for the terminal to determine whether to start a drx-onDurationTimer of one or more target DRX configurations corresponding to the physical-layer power-saving indication information; and a processing unit 1002, configured to perform processing according to whether the one or more target DRX configurations are activated by the terminal.

Optionally, the apparatus may further include a second transmitting unit, configured to transmit physical-layer power-saving reference information to the terminal, where the physical-layer power-saving reference information includes a physical-layer power-saving configuration and a mapping relationship between the physical-layer power-saving configuration and a DRX configuration.

Optionally, the target DRX configuration includes a DRX configuration for a PTM transmission, or the target DRX configuration includes the DRX configuration for the PTM transmission and a DRX configuration for a PTP transmission.

Optionally, the mapping relationship between physical-layer power-saving configuration and DRX configuration includes any one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

Optionally, the physical-layer power-saving configuration further includes: indication information, used for indicating whether a DCI bearing the physical-layer power-saving indication information carries a DRX index, and/or used for indicating a correspondence between a specified flag bit in the DCI and the DRX index.

Optionally, the physical-layer power-saving configuration further includes one or more of the following information: an effective duration of the physical-layer power-saving indication information, and a quantity of DRX configurations for which the physical-layer power-saving indication information is in effect.

It should be noted that the above apparatus provided in the embodiment of the present disclosure can implement all method steps implemented by the network device in the above method embodiments, and can achieve the same technical effects. Therefore, the description and beneficial effects of this embedment that are the same as the method embodiments will not be described here in detail.

It should be noted that the division of units in the embodiments of the present disclosure is illustrative, and is only a logical function division, and there may be another division manner in actual implementation. In addition, the functional units in various embodiments of the present disclosure may be integrated into one processing unit, or each unit may exist separately physically, or two or more units may be integrated into one unit. The above-mentioned integrated units may be implemented in the form of hardware or in the form of software functional units.

If the integrated unit is implemented in the form of a software function unit and sold or used as an independent product, it can be stored in a processor-readable storage medium. Based on such an understanding, essential parts, or parts contributing to the related art, of the technical solution of the present disclosure, or all or a part of the technical solution may be implemented in a form of a software product. The computer software product is stored in a storage medium, and includes several instructions to enable a computer device (which may be a personal computer, a server, or a network device, etc.) or a processor to execute part or all of the steps of the methods described in the various embodiments of the present disclosure. The aforementioned storage media include: universal serial bus (USB) flash drive, removable hard disk, read-only memory (ROM), random access memory (RAM), magnetic disk, optical disc or other media that can store program codes.

An embodiment of the present disclosure further provides a readable storage medium, where the readable storage medium stores a program. The program is executed by a processor to implement various processes in the above embodiments about the information processing method, and can achieve the same technical effects, which are not described in this place to avoid repetition. The readable storage medium may be any available medium or data storage device that can be accessed by the processor, including but not limited to magnetic storage (such as floppy disk, hard disk, magnetic tape, magneto-optical disk (MO)), optical storage (such as compact disc (CD), digital versatile disc (DVD), blue-ray disc (BD), high-definition versatile disc (HVD)), and semiconductor memory (such as ROM, erasable programmable ROM (EPROM), electrically erasable programmable ROM (EEPROM), non-volatile memory (NAND FLASH), solid-state drive (SSD)), etc.

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code which is called and executed by a certain processing element of the above device to perform the functions of the determination module. Other modules have similar implementations. In addition, all or part of these modules may be integrated together, and may be implemented independently. The processing element mentioned here may be an integrated circuit with signal processing capability. In the implementation process, the various steps of the above method or the above various modules may be implemented by an integrated logic circuit in hardware form in elements of a processor or instructions in the form of software.

For example, the various modules, units, subunits or submodules may be one or more integrated circuits configured to implement the above methods, such as one or more application specific integrated circuits (ASIC), or one or more microprocessors (digital signal processor, DSP), or one or more field programmable gate arrays (FPGA). As another example, when a module described above is implemented in the form of program codes called by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present disclosure are used for distinguishing between similar objects and are not necessarily used for describing a specific order or sequence. It should be understood that the terms used in this way may be interchanged under appropriate circumstances, so that the embodiments of the present disclosure described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent in the process, method, product, or device. Moreover, the term "and/or" used in the specification and the claims indicates at least one of connected objects, for example, A and/or B and/or C represents 7 situations including: A alone, B alone, C alone, both A and B, both B and C, both A and C, and all of A, B and C. Similarly, the use of "at least one of A and B" in this specification and claims should be understood as "A alone, B alone, or both A and B".

It should be noted that in this specification, terms "include", "comprise" or any other variants thereof are intended to cover non-exclusive inclusion, so that a process, method, article or device including a series of elements not only includes those elements, but also includes other elements not explicitly listed, or elements inherent in the process, method, article, or device. Without more restrictions, an element defined by the sentence "including a..." does not exclude the existence of other identical elements in the process, method, article or device that includes the element.

Through the description of the above embodiments, those skilled in the art can clearly understand that the method of the above embodiments can be implemented by means of software plus a necessary general hardware platform, and can also implemented by hardware without doubt, and in many cases, the former is a better implementation. Based on such an understanding, essential parts, or parts contributing to the related art, of the technical solution of the present disclosure can be embodied in the form of a software product. The computer software product is stored in a storage medium (such as ROM/RAM, magnetic disk, optical disc), which includes several instructions to make a terminal (which may be a mobile phone, a computer, a server, an air conditioner, or a network device, etc.) execute the method described in each of embodiments of the present disclosure.

The embodiments of the present disclosure are described above with reference to the accompanying drawings, but the present disclosure is not limited to the above-mentioned specific embodiments. The above-mentioned specific embodiments are only illustrative and not restrictive. Those of ordinary skill in the art can make many forms under the enlightenment of the present disclosure and without departing from the principle of the present disclosure and the scope of the claims, all of which shall fall within the scope of the present disclosure.

## Claims

1. An information processing method, applied to a terminal, comprising:
receiving, by the terminal, physical-layer power-saving indication information transmitted by a network device; and
determining, by the terminal based on the physical-layer power-saving indication information, whether to start a DRX on-duration timer of one or more target discontinuous reception (DRX) configurations corresponding to the physical-layer power-saving indication information.

2. The information processing method according to claim 1, wherein the target DRX configuration comprises a DRX configuration for a point-to-multipoint (PTM) transmission, or the target DRX configuration comprises the DRX configuration for the PTM transmission and a DRX configuration for a point-to-point (PTP) transmission.

3. The information processing method according to claim 1, further comprising:
obtaining, by the terminal, physical-layer power-saving reference information transmitted by the network device, wherein the physical-layer power-saving reference information comprises a physical-layer power-saving configuration and a mapping relationship between the physical-layer power-saving configuration and a DRX configuration;
wherein the physical-layer power-saving configuration comprises a value of a power saving radio network temporary identity (PS-RNTI), and different PS-RNTI values correspond to different respective physical-layer power-saving indication information.

4. The information processing method according to claim 3, wherein the determining, by the terminal based on the physical-layer power-saving indication information, whether to start the DRX on-duration timer of one or more target DRX configurations corresponding to the physical-layer power-saving indication information comprises:
determining, by the terminal based on the physical-layer power-saving indication information and the physical-layer power-saving reference information, whether to start the DRX on-duration timer of one or more target DRX configurations.

5. The information processing method according to claim 3, wherein the mapping relationship comprises one or more of the following:
one physical-layer power-saving configuration corresponds to all DRX configurations of one terminal;
one physical-layer power-saving configuration corresponds to a DRX configuration associated with one multicast and broadcast service (MBS);
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one group-radio network temporary identity (Group-RNTI).

6. The information processing method according to claim 3, wherein the physical-layer power-saving configuration further comprises: indication information, used for indicating whether a downlink control information (DCI) bearing the physical-layer power-saving indication information carries a DRX index, and/or used for indicating a correspondence between a specified flag bit in the DCI and the DRX index; and
the determining, by the terminal based on the physical-layer power-saving indication information and the physical-layer power-saving reference information, whether to start the DRX on-duration timer of one or more target DRX configurations comprises:
determining, by the terminal based on the physical-layer power-saving indication information, the physical-layer power-saving configuration, the mapping relationship between the physical-layer power-saving configuration and the DRX configuration, and the indication information, whether to start the DRX on-duration timer of one or more target DRX configurations.

7. The information processing method according to claim 4, wherein the determining, by the terminal based on the physical-layer power-saving indication information and the physical-layer power-saving reference information, whether to start the DRX on-duration timer of one or more target DRX configurations comprises one or more of the following:
starting or not starting, by the terminal, DRX on-duration timers of all DRX configurations;
starting or not starting, by the terminal, a DRX on-duration timer of a target DRX configuration associated with a target MBS service or a target MBS session;
starting or not starting, by the terminal, a DRX on-duration timer of a first target DRX configuration, wherein a configuration index of the first target DRX configuration or a Group-RNTI associated with the first target DRX configuration corresponds to the physical-layer power-saving configuration;
starting or not starting, by the terminal, a DRX on-duration timer of a second target DRX configuration, wherein a configuration index of the second target DRX configuration is a DRX index indicated by a DCI bearing the physical-layer power-saving indication information.

8. The information processing method according to claim 3 or 7, wherein the physical-layer power-saving configuration further comprises one or more of the following information: an effective duration of the physical-layer power-saving indication information, and a quantity of DRX configurations for which the physical-layer power-saving indication information is in effect.

9. The information processing method according to claim 8, wherein the determining, by the terminal, whether to start the DRX on-duration timer of one or more target DRX configurations comprises one or more of the following:
starting or not starting, by the terminal, the DRX on-duration timers of all DRX configurations within the effective duration of the physical-layer power-saving indication information;
starting or not starting, by the terminal, a first target quantity of DRX on-duration timers within the defined quantity of DRX configurations for which the physical-layer power-saving indication information is in effect, wherein the first target quantity is related to the quantity of DRX configurations for which the physical-layer power-saving indication information is in effect;
starting or not starting, by the terminal, a DRX on-duration timer of a target DRX configuration associated with a target MBS service or a target MBS session within the effective duration of the physical-layer power-saving indication information;
starting or not starting, by the terminal, a second target quantity of DRX on-duration timers associated with the target MBS service or the target MBS session within the defined quantity of DRX configurations for which the physical-layer power-saving indication information is in effect, wherein the second target quantity is related to the quantity of DRX configurations for which the physical-layer power-saving indication information is in effect;
starting or not starting, by the terminal, a DRX on-duration timer of a second target DRX configuration within the effective duration of the physical-layer power-saving indication information;
starting or not starting, by the terminal, DRX on-duration timers of a third target quantity of second target DRX configurations within the defined quantity of DRX configurations for which the physical-layer power-saving indication information is in effect, wherein the third target quantity is related to the quantity of DRX configurations for which the physical-layer power-saving indication information is in effect.

10. An information processing method, applied to a network device, comprising:
determining, by the network device, whether a DRX configuration of a terminal needs to be activated; and
transmitting, by the network device, physical-layer power-saving indication information to the terminal, wherein the physical-layer power-saving indication information is used for the terminal to determine whether to start a DRX on-duration timer of one or more target DRX configurations corresponding to the physical-layer power-saving indication information.

11. The information processing method according to claim 10, further comprising:
transmitting, by the network device, physical-layer power-saving reference information to the terminal, wherein the physical-layer power-saving reference information comprises a physical-layer power-saving configuration and a mapping relationship between the physical-layer power-saving configuration and a DRX configuration.

12. An information processing apparatus for a terminal, wherein the apparatus comprises: a memory, a transceiver and a processor;
wherein the memory is configured to store a computer program; the transceiver is configured to transmit and receive data under the control of the processor; the processor is configured to read the computer program from the memory to perform the following operations:
receiving physical-layer power-saving indication information transmitted by a network device; and
determining, based on the physical-layer power-saving indication information, whether to start a DRX on-duration timer of one or more target DRX configurations corresponding to the physical-layer power-saving indication information.

13. The information processing apparatus according to claim 12, wherein the processor is further configured to read the computer program from the memory to:
receive physical-layer power-saving reference information transmitted by the network device, wherein the physical-layer power-saving reference information comprises a physical-layer power-saving configuration and a mapping relationship between the physical-layer power-saving configuration and a DRX configuration;
wherein the physical-layer power-saving configuration comprises a value of a PS-RNTI, and different PS-RNTI values correspond to different respective physical-layer power-saving indication information.

14. The information processing apparatus according to claim 13, wherein the mapping relationship comprises one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

15. The information processing apparatus according to claim 13, wherein the physical-layer power-saving configuration further comprises: indication information, used for indicating whether a DCI bearing the physical-layer power-saving indication information carries a DRX index, and/or used for indicating a correspondence between a specified flag bit in the DCI and the DRX index; and
the processor is further configured to read the computer program from the memory to: determine, based on the physical-layer power-saving indication information, the physical-layer power-saving configuration, the mapping relationship between the physical-layer power-saving configuration and the DRX configuration, and the indication information, whether to start the DRX on-duration timer of one or more target DRX configurations.

16. The information processing apparatus according to claim 12, wherein the processor is further configured to read the computer program from the memory to perform any one or more of the following:
starting or not starting DRX on-duration timers of all DRX configurations;
starting or not starting a DRX on-duration timer of a target DRX configuration associated with a target MBS service or a target MBS session;
starting or not starting a DRX on-duration timer of a first target DRX configuration, wherein a configuration index of the first target DRX configuration or a Group-RNTI associated with the first target DRX configuration corresponds to the physical-layer power-saving configuration;
starting or not starting a DRX on-duration timer of a second target DRX configuration, wherein a configuration index of the second target DRX configuration is a DRX index indicated by a DCI bearing the physical-layer power-saving indication information.

17. The information processing apparatus according to claim 13, wherein the physical-layer power-saving configuration further comprises one or more of the following information: an effective duration of the physical-layer power-saving indication information, and a quantity of DRX configurations for which the physical-layer power-saving indication information is in effect.

18. An information processing apparatus for a network device, wherein the apparatus comprises: a memory, a transceiver and a processor;
wherein the memory is configured to store a computer program; the transceiver is configured to transmit and receive data under the control of the processor; the processor is configured to read the computer program from the memory to perform the following operations:
determining whether a DRX configuration of a terminal needs to be activated;
transmitting physical-layer power-saving indication information to the terminal, wherein the physical-layer power-saving indication information is used for the terminal to determine whether to start a DRX on-duration timer of one or more target DRX configurations corresponding to the physical-layer power-saving indication information; and
performing processing according to whether the one or more target DRX configurations are activated by the terminal.

19. An information processing apparatus for a terminal, comprising:
a first receiving unit, configured to receive physical-layer power-saving indication information transmitted by a network device; and
a first determining unit, configured to determine, based on the physical-layer power-saving indication information, whether to start a DRX on-duration timer of one or more target DRX configurations corresponding to the physical-layer power-saving indication information.

20. The information processing apparatus according to claim 19, wherein the target DRX configuration comprises a DRX configuration for a PTM transmission, or the target DRX configuration comprises the DRX configuration for the PTM transmission and a DRX configuration for a PTP transmission.

21. The information processing apparatus according to claim 19, further comprising:
a second receiving unit, configured to obtain physical-layer power-saving reference information transmitted by the network device, wherein the physical-layer power-saving reference information comprises a physical-layer power-saving configuration and a mapping relationship between the physical-layer power-saving configuration and a DRX configuration;
wherein the physical-layer power-saving configuration comprises a value of a PS-RNTI, and different PS-RNTI values correspond to different respective physical-layer power-saving indication information.

22. The information processing apparatus according to claim 21, wherein the first determining unit is configured to determine, based on the physical-layer power-saving indication information and the physical-layer power-saving reference information, whether to start the DRX on-duration timer of one or more target DRX configurations.

23. The information processing apparatus according to claim 21, wherein the mapping relationship comprises one or more of the following:
one physical-layer power-saving configuration corresponds to all DRX configurations of one terminal;
one physical-layer power-saving configuration corresponds to a DRX configuration associated with one MBS service;
one physical-layer power-saving configuration corresponds to a DRX configuration associated with one MBS session;
one physical-layer power-saving configuration corresponds to a DRX configuration with a specified DRX index;
one physical-layer power-saving configuration corresponds to a DRX configuration associated with one Group-RNTI.

24. The information processing apparatus according to claim 21, wherein the physical-layer power-saving configuration further comprises: indication information, used for indicating whether a DCI bearing the physical-layer power-saving indication information carries a DRX index, and/or used for indicating a correspondence between a specified flag bit in the DCI and the DRX index; and
the first determining unit is further configured to determine, based on the physical-layer power-saving indication information, the physical-layer power-saving configuration, the mapping relationship between the physical-layer power-saving configuration and the DRX configuration, and the indication information, whether to start the DRX on-duration timer of one or more target DRX configurations.

25. The information processing apparatus according to claim 22, wherein the first determining unit is configured to perform one or more of the following:
starting or not starting DRX on-duration timers of all DRX configurations;
starting or not starting a DRX on-duration timer of a target DRX configuration associated with a target MBS service or a target MBS session;
starting or not starting a DRX on-duration timer of a first target DRX configuration, wherein a configuration index of the first target DRX configuration or a Group-RNTI associated with the first target DRX configuration corresponds to the physical-layer power-saving configuration;
starting or not starting a DRX on-duration timer of a second target DRX configuration, wherein a configuration index of the second target DRX configuration is a DRX index indicated by the DCI bearing the physical-layer power-saving indication information.

26. The information processing apparatus according to claim 21 or 25, wherein the physical-layer power-saving configuration further comprises one or more of the following information: an effective duration of the physical-layer power-saving indication information, and a quantity of DRX configurations for which the physical-layer power-saving indication information is in effect.

27. The information processing apparatus according to claim 26, wherein the first determining unit is configured to perform one or more of the following:
starting or not starting, by the terminal, the DRX on-duration timers of all the DRX configurations within the effective duration of the physical-layer power-saving indication information;
starting or not starting, by the terminal, a first target quantity of DRX on-duration timers within the defined quantity of DRX configurations for which the physical-layer power-saving indication information is in effect, wherein the first target quantity is related to the quantity of DRX configurations for which the physical-layer power-saving indication information is in effect;
starting or not starting, by the terminal, a DRX on-duration timer of a target DRX configuration associated with a target MBS service or a target MBS session within the effective duration of the physical-layer power-saving indication information;
starting or not starting, by the terminal, a second target quantity of DRX on-duration timers associated with the target MBS service or the target MBS session within the defined quantity of DRX configurations for which the physical-layer power-saving indication information is in effect, wherein the second target quantity is related to the quantity of DRX configurations for which the physical-layer power-saving indication information is in effect;
starting or not starting, by the terminal, a DRX on-duration timer of a second target DRX configuration within the effective duration of the physical-layer power-saving indication information;
starting or not starting, by the terminal, DRX on-duration timers of a third target quantity of second target DRX configurations within the defined quantity of DRX configurations for which the physical-layer power-saving indication information is in effect, wherein the third target quantity is related to the quantity of DRX configurations for which the physical-layer power-saving indication information is in effect.

28. An information processing apparatus for a network device, comprising:
a first transmitting unit, configured to determine whether a DRX configuration of a terminal needs to be activated, and transmit physical-layer power-saving indication information to the terminal, wherein the physical-layer power-saving indication information is used for the terminal to determine whether to start DRX on-duration timer of one or more target DRX configurations corresponding to the physical-layer power-saving indication information; and
a processing unit, configured to perform processing according to whether the one or more target DRX configurations are activated by the terminal.

29. A computer-readable storage medium, wherein the computer-readable storage medium stores a computer program, and the computer program is configured to be executed by a computer to perform the method according to any one of claims 1 to 11.
